# EUROPÄISCHE PATENTSCHRIFT

(11) **EP 3 408 197 B1**
(45) Veröffentlichungstag und Bekanntmachung des Hinweises auf die Patenterteilung: **10.03.2021**
(21) Anmeldenummer: 17825182.3
(22) Anmeldetag: 15.12.2017
(51) Int. Cl.: B65G 39/07, B65G 39/04

(54) **FÖRDERROLLE MIT KONISCHEM AUFSCHIEBLING**
CONVEYOR ROLLER WITH CONICAL TAPERED ELEMENT
ROULEAU DE TRANSPORT AVEC COYAU CONIQUE

(30) Priorität: 21.12.2016 DE 102016125136
(43) Veröffentlichungstag der Anmeldung: 05.12.2018
(73) Patentinhaber: Interroll Holding AG, 6592 Sant' Antonino (CH)
(72) Erfinder: LANGENSIEPEN, Dominik, 42929 Wermelskirchen (DE); LINDHOLM, Armin, 42929 Wermelskirchen (DE)
(74) Vertreter: Kohlhof, Stephan
(86) Internationale Anmeldenummer: PCT/EP2017/083022
(87) Internationale Veröffentlichungsnummer: WO 2018/114668

(56) Entgegenhaltungen:
- WO-A1-2015/034421
- WO-A1-2015/034421
- JP-A- 2011 037 576
- JP-A- 2011 037 576
- US-A1- 2002 074 208

## Beschreibung

Die Erfindung betrifft eine Förderrolle für Förderanlagen zum Fördern von Behältern, Paletten und dergleichen, mit einem zylindrischen Rollenkörper mit einer Rotationsachse, der zur rotierbaren Montage in einem Rahmen oder dergleichen vorgesehen ist, wobei auf dem Rollenkörper eine oder mehrere im Wesentlichen kegelstumpfförmige Hülsen angeordnet sind. Ferner betrifft die Erfindung ein Herstellungsverfahren für derartige Förderrollen.

Förderrollen dieser Bauart werden für unterschiedliche Zwecke in logistischen Anwendungen eingesetzt. So können sie beispielsweise in der Palettenförderung, bei der Förderung von Paketen in Paketversandzentren, zur Förderung von Behältern in Lagern unterschiedlicher Art oder zum Gepäcktransport in Flughäfen und in zahlreichen anderen Anwendungen eingesetzt werden. Dabei werden solche Förderrollen regelmäßig in Förderstrecken eingesetzt, die aus mehreren nebeneinander angeordneten Rollen bestehen, deren obere Umfangsfläche jeweils zur Aufnahme des Förderguts dient. In diesen Förderstrecken sind einerseits Leerlaufrollen angeordnet, die antriebslos sind und lediglich in einem Fördergestell drehbar gelagert sind. Weiterhin sind in diesen Förderstrecken angetriebene Förderrollen angeordnet, die motorbetrieben sind und durch eine elektrische Antriebseinheit in Rotation versetzt werden. Diese motorbetriebenen Förderrollen sind solcherart aufgebaut, dass die Antriebseinheit innerhalb der Rolle selbst angeordnet ist, sodass keine außerhalb des Rollenkörpers angeordneten mechanischen Komponenten erforderlich sind, um die Rotation der Rolle zu erzeugen. Die motorbetriebenen Förderrollen dienen einerseits dazu, unmittelbar über die äußere Umfangsfläche ihres Rollenkörpers das Fördergut zu transportieren, andererseits können mittels einer Übertragung der Rotation der motorbetriebenen Förderrolle auf eine oder mehrere Leerlaufrollen mittels eines Übertragungselementes, beispielsweise eines Riemenantriebs, durch die motorbetriebene Förderrolle auch die Leerlaufrollen in Rotation versetzt werden, um auch über deren äußere Umfangsfläche das Fördergut anzutreiben.

Förderrollen, die mit wenigstens einer kegelstumpfförmigen Hülse versehen sind, werden eingesetzt, um Kurven in solchen Förderstrecken abzubilden. Wird ein Förderband um eine Kurve geführt, sind mehrere solcher Rollenköper mit kegelstumpfförmigen Hülsen vorzusehen, um das Band entsprechend zu führen. Dabei sind Förderrollen bekannt, bei denen der Rollenkörper selbst insgesamt konisch ausgebildet ist. Gegenständlich bezieht sich die Erfindung aber auf Förderrollen, bei denen der Rollenkörper selbst im Wesentlichen zylindrisch ist und auf seiner Mantelfläche eine oder mehrere kegelstumpfförmige Hülsen angeordnet sind.

Eine solche Anordnung ist aus US 7,299,909 B1 bekannt. Bei der dort offenbarten Vorrichtung ist die kegelstumpfförmige Hülse innen hohl ausgeführt und weist mehrere Stützringe auf, die einen im Wesentlichen zylindrischen Durchbruch haben, sodass sich die kegelstumpfförmige Hülse über die Ringe an der Außenumfangsfläche des Rollenkörpers abstützen kann. Problematisch bei solchen Rollen ist allerdings, dass sich bei hohen Kräften, die auf die schräge Fläche der kegelstumpfförmigen Hülse wirken, als auch bei hoher Geschwindigkeit die Hülse gegen ihren Presssitz verschieben kann und es so zu einer Fehlbelastung und Beschädigung der Förderrolle kommen kann. Auch kann hierdurch zu förderndes Gut beschädigt werden, wenn der Bandverlauf aufgrund der Verschiebung der kegelstumpfförmigen Hülse verschoben ist.

Eine demgegenüber verbesserte Förderrolle ist in US 6,523,665 B2 (US 2002/0074208 A1) offenbart. Bei der dort offenbarten Förderrolle, die nicht motorbetrieben ist, sind die kegelstumpfförmigen Hülsen, die auf den zylindrischen Rollenkörper aufgeschoben sind aus einem Vollmaterial gebildet und mit einem Presssitz befestigt. Sie sind aus einem Kunststoffmaterial gebildet. Um die axiale Position noch besser festzusetzen, ist eine Spannhülse vorgesehen, die in eine Bohrung gesetzt ist, die sich sowohl durch die kegelstumpfförmige Hülse, als auch durch den Rollenkörper erstreckt. Diese Spannhülse wird mittels eines Hammers eingeschlagen, sodass die axiale Position der kegelstumpfförmigen Hülse festgesetzt ist.

Allerdings hat sich auch diese Konstruktion als problematisch erwiesen, sodass weiterhin der Bedarf an Verbesserungen besteht. Insbesondere soll die Förderrolle gemäß der Erfindung auch in der lebensmittelverarbeitenden Industrie eingesetzt werden können.

JP 2011 037576 A offenbart eine weitere Förderrolle mit auf dem Rollenkörper angeordneten kegelstumpfförmigen Hülsen. Die Hülsen sind untereinander gegen Relativdrehung gesichert. Zudem sind die Hülsen durch Klemmung auf dem Rollenkörper festgelegt und mit einem auf den Rollenkörper geklemmten Ring gesichert.

Die Erfindung löst die Aufgabe der einzelnen Förderrolle der eingangs genannten Art durch eine Förderrolle mit den Merkmalen des Anspruchs 1.

Die Kegelspitze bezeichnet den verengten Abschnitt der kegelstumpfförmigen Hülse. Die Kegelöffnung bezeichnet entsprechend den erweiterten Abschnitt der kegelstumpfförmigen Hülse. Die Abstützung von Kräften in Richtung der Kegelöffnung lässt sich konstruktiv einfach durch einen Ring oder einen Deckel an dem Rollenkörper lösen. Die Abstützung zur Kegelspitze hin jedoch war bislang problematisch. Da die Hülse an ihrer Kegelspitze einen Durchmesser aufweist, der dem des Rollenkörpers nahezu entspricht, wurde eine Abstützung an dieser Stelle traditionell mittels Reibschluss gelöst. Allerdings bestand auch hierbei das Problem, dass sich die Hülse lösen kann, beispielsweise, wenn aufgrund einer ungleichmäßigen Förderung von Fördergut schlagartige Kräfte auf die Hülsen wirken.

Der Erfindung liegt die Erkenntnis zugrunde, dass zwar eine Ausführung wie in US 6,523,665 B2 (US 2002/0074208 A1) offenbart, grundsätzlich funktioniert, allerdings für einen Einsatz in der lebensmittelverarbeitenden Industrie weniger geeignet ist. Förderrollen sind in der Regel mit Öl oder Fett geschmiert, um die Reibung zu reduzieren. Der Einsatz einer Spannhülse, die einen zentralen Durchlass aufweist, stellt eine Verbindung zwischen dem Innenraum des Rollenkörpers und der Umgebung her und kann so dazu führen, dass Öl oder Fett aus dem Innenraum in die Umgebung und auch in zu fördernden Lebensmittel gerät. Dies ist in der Lebensmittelindustrie nicht hinnehmbar. Zwar ist es grundsätzlich denkbar eine solche Spannhülse zu diesem Zweck zu versiegeln, allerdings besteht auch hier die Gefahr, dass die Versiegelung nicht dicht ist, oder sich im Laufe des Betriebs, auch aufgrund von Temperaturschwankungen und Fliehkräften löst. Eine Wartung der Versiegelung ist zudem aufwendig. Zudem können durch den Durchlass bzw. die Versiegelung Medien, insbesondere Reinigungsflüssigkeiten, in die Rolle eindringen und Schäden an Lagern oder anderen Komponenten verursachen.

Die Erfindung schlägt daher eine Positioniereinrichtung vor, die einen sich an dem Rollenkörper radial erstreckenden Vorsprung umfasst, der sich in eine in der Hülse ausgebildete Ausnehmung erstreckt. Hierdurch wird eine Verbindung zwischen Innenraum und Umgebung vermieden und der geschlossene Rollenkörper nicht verletzt, insbesondere die innere Oberfläche des Rollenkörpers nicht durchlässig gemacht. Der Vorsprung erstreckt sich nach außen und in eine Ausnehmung an der Hülse derart hinein, dass die Hülse wenigstens entlang der Rotationsachse, also in axialer Richtung und in Richtung ihrer Kegelöffnung axial festgelegt ist. Hierdurch wird eine axiale dauerhafte Festlegung erreicht, die auch größeren Kräften standhalten kann, ohne allerdings eine Verbindung zwischen Innenraum des Rollenkörpers und Umgebung herzustellen.

Erfindungsgemäß legt die Positioniereinrichtung die Hülse formschlüssig fest. Dies ist besonders bevorzugt, da hierdurch eine definierte Position der Hülse auf dem Rollenkörper erreicht wird.

In einer bevorzugten Weiterbildung ist der Vorsprung mittels einer Schweißverbindung mit dem Rollenkörper verbunden. Alternativ kann der Vorsprung einstückig an dem Rollenkörper angeformt sein. Wichtig ist, dass sich der Vorsprung nicht derart in das Innere des Rollenkörpers erstreckt, dass eine Verbindung zur Umgebung hergestellt ist. Die Verbindung des Vorsprungs mit dem Rollenkörper mittels einer Schweißverbindung ist besonders bevorzugt, da so die Rollenkörper grundsätzlich als Gleichteile hergestellt werden können und bedarfsweise, wenn eine kegelstumpfförmige Hülse aufgeschoben werden soll, ein entsprechender Vorsprung angebracht wird.

Vorzugsweise ist der Vorsprung in eine Ausnehmung in dem Rollenkörper eingesetzt. Der Vorsprung ist vorzugsweise als separates Bauteil ausgebildet, beispielsweise als Scheibe, Stift, rechteckiger Block, teilzylindrisches Element oder dergleichen. Vorzugsweise ist der Vorsprung als Metallelement ausgebildet. Gemäß dieser Ausführungsform ist in dem Rollenkörper eine Ausnehmung vorgesehen, die sich allerdings nicht bis in den Innenraum erstreckt. Die Ausnehmung ist also als Nut mit einem Nutgrund ausgebildet. Der Vorsprung kann in einem solchen Fall nach Art einer Passfeder ausgebildet sein. Hierdurch wird neben dem Verschweißen, oder alternativ hierzu, eine formschlüssige Verbindung zwischen Vorsprung und Rollenkörper erreicht. Gleichzeitig wird eine formschlüssige Verbindung zwischen Vorsprung und Rollenkörper erreicht. Gleichzeitig wird eine formschlüssige Verbindung zwischen Hülse und Vorsprung erreicht. Auf diese Weise wird insgesamt eine formschlüssige Verbindung zwischen Hülse und Rollenkörper erreicht. Zusätzliche Befestigungsmittel, wie beispielsweise Schweißen oder Kleben kann in einem solchen Fall entfallen.

In einer bevorzugten Weiterbildung sind Ausnehmung und Vorsprung im verengten Bereich der kegelstumpfförmigen Hülse angeordnet, also an dem Ende zur Kegelspitze hin. Dies ist dann besonders bevorzugt, wenn die Ausnehmung in der Hülse als Durchgangsloch ausgebildet ist. In diesem Fall kann der Vorsprung klein ausgebildet werden, wodurch auch ein Widerstandsschweißen vereinfacht ist. Vorzugsweise sind Ausnehmung und Vorsprung im ersten Drittel der Längserstreckung der Hülse, gesehen vom verengten Stirnende aus, angeordnet, vorzugsweise im ersten Viertel, im ersten Fünftel, im ersten Sechstel, besonders bevorzugt im ersten Siebtel.

In einer Alternative hierzu sind Ausnehmung und Vorsprung im erweiterten Bereich der kegelstumpfförmigen Hülse angeordnet, also an dem Ende zur Kegelöffnung hin. Wiederum ist bevorzugt, dass Vorsprung und Ausnehmung im ersten Drittel gesehen vom Stirnende der Kegelöffnung aus angeordnet sind, vorzugsweise im ersten Viertel, im ersten Fünftel, im ersten Sechstel, besonders bevorzugt im ersten Siebtel. Diese Variante ist bevorzugt, wenn die Ausnehmung in der Hülse nicht als Durchgangsloch ausgebildet ist, sondern insbesondere eine axial offene Ausnehmung, die sich radial von einer Innenumfangsfläche der Hülse nach außen erstreckt.

Bei einer solchen Ausführungsform ist ferner besonders bevorzugt, wenn Ausnehmung und Vorsprung von einer zweiten kegelstumpfförmigen Hülse radial überdeckt sind, die sich an die erste kegelstumpfförmige Hülse auf dem Rollenkörper anschließt. Je nach Ausführungsform können zwei oder mehr solcher kegelstumpfförmigen Hülsen hintereinander geschaltet angeordnet sein, und sich in einem Kontaktbereich teleskopartig überlappen. Das heißt, der Abschnitt der Kegelöffnung wird radial äußerlich von einem verengten Bereich einer zweiten axial benachbarten Hülse überlappt. Die Verbindung der Hülsen kann über bekannte Form- oder Reibschlussmittel erfolgen. Bevorzugt ist in dieser Variante die Ausnehmung in der Hülse in dem Abschnitt der Kegelöffnung angeordnet, der radial äußerlich von der zweiten Hülse überlappt wird. Dies hat zum Vorteil, dass der Vorsprung radial äußerlich nicht sichtbar ist, also auch nicht mit einem Fördergut oder einem auf der Förderrolle angeordneten Band in Kontakt kommen kann und das Fördergut oder das Band somit nicht zusätzlich beansprucht wird. Ferner bietet eine solche Anordnung eine Montagesicherung, falls der Vorsprung nicht fest mit dem Rollenkörper verbunden ist.

In einem zweiten Aspekt löst die Erfindung die Aufgabe bei einem Herstellungsverfahren der eingangs genannten Art mit den Schritten: Bereitstellen oder Herstellen eines Rollenkörpers; Anordnen einer kegelstumpfförmigen Hülse auf dem Rollenkörper; und axiales Festsetzen der Hülse, wenigstens entlang der Rotationsachse und in Richtung ihrer Kegelspitze. Es soll verstanden werden, dass die Förderrolle gemäß dem ersten Aspekt der Erfindung und das Herstellungsverfahren gemäß dem zweiten Aspekt der Erfindung eine Vielzahl an gemeinsamen Unteraspekten haben, wie sie insbesondere in den Unteransprüchen niedergelegt sind. Insofern wird vollumfänglich auf die obige Beschreibung in Bezug auf bevorzugte Ausführungsformen, deren Merkmale sowie Vorteile verwiesen.

Erfindungsweise umfasst der Schritt des Festsetzens ferner: Einsetzen eines Vorsprungs in eine Ausnehmung in der Hülse, sodass der Vorsprung in Kontakt mit dem Rollenkörper steht.

Vorzugsweise umfasst das Verfahren ferner den Schritt: Widerstandsschweißen des Vorsprungs mit dem Rollenkörper. Dieser Schritt wird vorzugsweise nach dem Einsetzen des Vorsprungs in die Ausnehmung in der Hülse durchgeführt.

Alternativ oder zusätzlich umfasst das Festsetzen den Schritt: Einsetzen des Vorsprungs in eine Ausnehmung des Rollenkörpers. In dieser Variante kann das Widerstandsschweißen entfallen, es kann aber auch zur zusätzlichen Sicherung durchgeführt werden. Vorzugsweise wird der Vorsprung wiederum durch die Durchgangsöffnung in der Hülse eingesetzt. Alternativ wird zunächst der Vorsprung in die Hülse des Rollenkörpers eingesetzt und anschließend die Hülse aufgeschoben, derart dass der Vorsprung in eine korrespondierende Ausnehmung an der Hülse eingreifen kann.

In einer bevorzugten Weiterbildung umfasst das Herstellungsverfahren ferner die Schritte: Anordnen einer zweiten kegelstumpfförmigen Hülse auf dem Rollenkörper, axial benachbart zu der ersten Hülse; und Überdecken des Vorsprungs mittels der zweiten Hülse.

Nachstehend wird die Erfindung anhand zweier Ausführungsbeispiele unter Bezugnahme auf die beiliegenden Figuren näher erläutert. Dabei zeigen:
- Figur 1: eine Seitenansicht einer Förderrolle gemäß der Erfindung;
- Figur 2: einen Querschnitt durch die Förderrolle gemäß einem ersten Ausführungsbeispiel;
- Figur 3: das Detail B aus Figur 2;
- Figur 4: einen Querschnitt durch eine Förderrolle gemäß einem zweiten Ausführungsbeispiel;
- Figur 5: das Detail B aus Figur 4;
- Figur 6: eine Darstellung der Förderrolle aus Figur 4 mit vier kegelstumpfförmigen Hülsen;
- Figur 7: ein Detail aus Figur 6;
- Figur 8: einen Querschnitt durch eine Förderrolle gemäß einem dritten Ausführungsbeispiel mit der Positioniereinrichtung des ersten Ausführungsbeispiels; und
- Figur 9: ein Detail mit einem alternativen Anschlussstück.

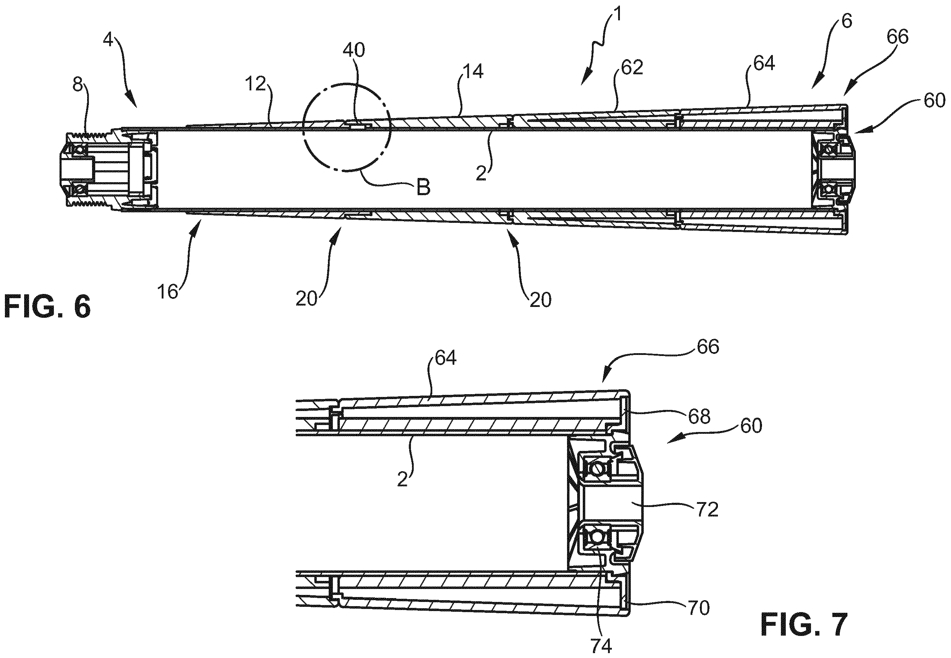

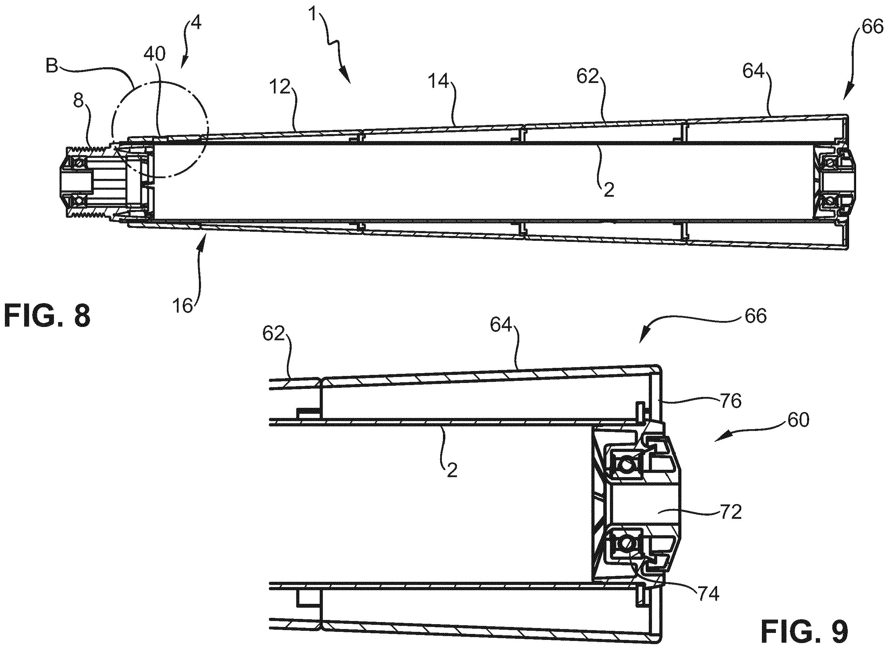

Eine Förderrolle 1 gemäß der Erfindung, zum Fördern von Behältern, Paletten und dergleichen weist einen zylindrischen Rollenkörper 2 auf. Der Rollenkörper 2 weist eine Rotationsachse Z auf, um die er drehbar in einem Gestell oder dergleichen montierbar ist. Dazu weist die Förderrolle 1 ein erstes Ende 4 und ein zweites Ende 6 auf, wobei im ersten Ende 4 ein Anschlussstück 8 vorgesehen ist, welches zum Übertrieb von Antriebsmomenten auf benachbarte Förder- oder Antriebsrollen vorgesehen ist. Ein entsprechendes Anschlussstück 60 (vgl. Fig. 6 und 8) kann auch an dem zweiten Ende 6 vorgesehen sein. Alternativ ist an dem Ende 6 ein anderes Anschlussstück angeordnet, beispielsweise die eines inneren Antriebs, wenn die Förderrolle 1 als motorbetriebene Förderrolle oder als Trommelmotor ausgebildet ist.

Die Förderrolle 1 gemäß der vorliegenden Ausführungsform wird überwiegend in Rollenkurven eingesetzt um Fördergüter gleichmäßig durch die Kurve zu fördern und nicht zum Kurveninneren oder -äußeren zu tragen. Hierzu werden durch die Kegelstumpfförmigen Hülsen 12, 14, 62, 64 (vgl. auch Fig. 6, 8) unterschiedliche Umfangsgeschwindigkeiten am Außenumfang der Förderrolle 1 realisiert. Die unterschiedlichen Umfangsgeschwindigkeiten treiben dann die Fördergüter entsprechend dem tatsächlichen Kurvenradius des Förderguts an und ermöglichen einen gleichförmigen Verlauf des Fördergutes durch die Rollenkurve.

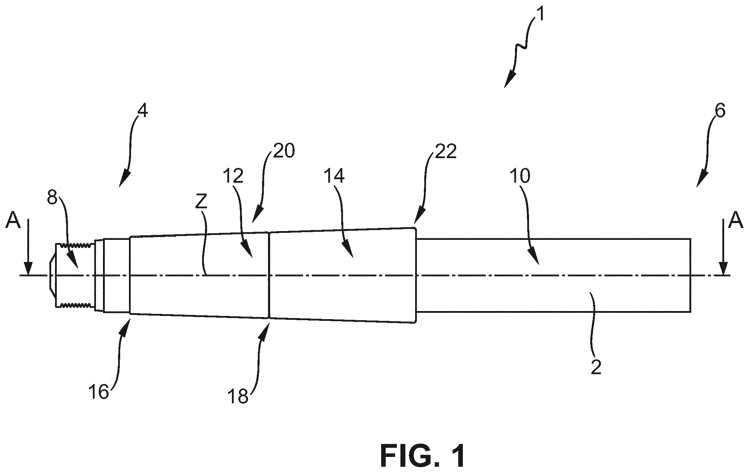

Im Speziellen ist die Förderrolle 1 gemäß der vorliegenden Ausführungsform (Fig. 1) mit zwei hintereinander angeordneten Hülsen 12, 14 ausgestattet und weist auf der Umfangsfläche 10 des Rollenkörpers 2 eine erste kegelstumpfförmige Hülse 12 und eine zweite kegelstumpfförmige Hülse 14 auf. Die zweite kegelstumpfförmige Hülse 14 schließt sich axial an die erste kegelstumpfförmige Hülse 12 an und ist benachbart zu dieser angeordnet. Jede der kegelstumpfförmigen Hülsen 12, 14 hat einen verengten Abschnitt 16, 18 sowie eine Kegelöffnung 20, 22. Damit insgesamt eine im Wesentlichen gleichmäßige Steigung erzielt wird, weist der verengte Abschnitt 18 der zweiten kegelstumpfförmigen Hülse 14 einen in etwa gleichen Durchmesser wie der Abschnitt mit der Kegelöffnung 20 der ersten kegelstumpfförmigen Hülse 12 auf. Es soll verstanden werden, dass weitere kegelstumpfförmige Hülsen 62, 64 auf dem Rollenkörper 2 vorgesehen werden können, wie dies insbesondere in den Figuren 6 bis 9 dargestellt ist. Insofern kann sich eine dritte kegelstumpfförmige Hülse 62 an die Kegelöffnung 22 der zweiten kegelstumpfförmigen Hülse 14 anschließen, dergestalt, dass der verengte Abschnitt der dritten kegelstumpfförmigen Hülse 62 dann einen Durchmesser aufweist, der in etwa dem Durchmesser der Kegelöffnung 22 der zweiten kegelstumpfförmigen Hülse 14 entspricht, wie dies auch weiter unten beschrieben werden wird. Die genaue Anzahl der kegelstumpfförmigen Hülsen 12, 14, 62, 64 ist abhängig von der Breite des Förderbandes, welches auf der Förderrolle 1 laufen soll, der Rollenkurve, sowie der axialen Länge des Rollenkörpers 2.

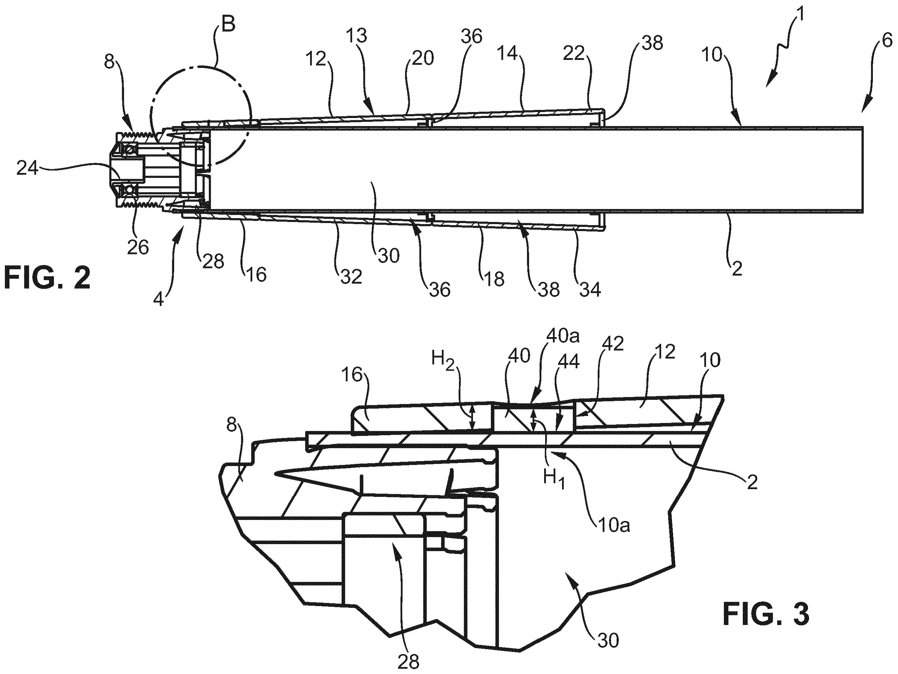

Die Figuren 2, 3 sowie 4 und 5 zeigen nun zwei verschiedene Ausführungsbeispiele, wobei verstanden werden soll, dass auch einzelne Merkmale dieser Ausführungsbeispiele kombiniert werden können. Insofern stellen die Ausführungsformen nur Beispiele dar.

Figur 2 zeigt die Förderrolle 1 aus Figur 1 im Querschnitt entlang des Schnitts A-A aus Figur 1. Insofern kann erkannt werden, dass das zweite Ende 6 offen ausgeführt ist und hier ein entsprechendes Anschlussstück 60 eingesetzt werden kann. Das Anschlussstück 8 weist ferner eine Achsaufnahme 24 auf, die mittels eines Rollenlagers 26 drehbar in dem Anschlussstück 8 gelagert ist. Das Anschlussstück 8 selbst ist radial innerlich über eine Verbindung 28 im Inneren 30 des Rollenkörpers 2 festgelegt, indem der Rollenkörper 2 an den Enden 4, 6 eingerollt wird.

Die kegelstumpfförmigen Hülsen 12, 14 weisen in dieser Ausführungsform (Figuren 2, 3) jeweils eine Wand 32, 34 auf, die eine gleichbleibende Wandstärke hat und insofern jeweils einen Hohlraum 38 zwischen der äußeren Umfangfläche 10 des Rollenkörpers 2 und der Hülse 12, 14 definiert. An den jeweiligen Kegelöffnungen 20, 22 sind die Hülsen 12, 14 über Rippen bzw. Stege 36 an dem Rollenkörper 2 abgestützt und festgesetzt.

Zur axialen Festlegung der kegelstumpfförmigen Hülse 12 ist in diesem Ausführungsbeispiel (Figuren 2 und 3) ein Vorsprung 40 vorgesehen, der sich radial an dem Rollenkörper 2 erstreckt und sich in einer in der Hülse 12 ausgebildete Ausnehmung 42 hinein erstreckt. Der Vorsprung 40 ist hier als Metallscheibe ausgebildet, die eine Höhe H₁ aufweist, die geringer ist als die Höhe H₂ der kegelstumpfförmigen Hülse 12 an dieser Stelle. Das heißt der Vorsprung 40 erstreckt sich nicht über die Umfangsfläche 13 der Hülse 12 und steht somit nicht nach außen vor. Es soll verstanden werden, dass es nicht erforderlich ist die Ausnehmung 42 als Durchgangsöffnung auszuführen und in diesem Ausführungsbeispiel (Figuren 2, 3) kann die Ausnehmung 42 ebenso als Sackloch ausgebildet sein, das sich von einer Innenseite der Hülse 12 radial nach außen erstreckt.

Gemäß diesem Ausführungsbeispiel (Figuren 2 und 3) weist der Rollenkörper 2 keine radial äußere Ausnehmung auf, sondern ist an seiner Umfangsfläche 10 vollständig im Wesentlichen zylindrisch. Der Vorsprung 40 liegt zunächst beim Montieren auf der Fläche 10 auf und bietet somit noch keine axiale Festlegung der Hülse 12. Die Hülse 12 ist nicht zusätzlich über einen Reibschluss axial an dem Rollenkörper 2 gesichert. Zum axialen Festlegen wird gemäß dieser Ausführungsform der Vorsprung 40 mit dem Rollenkörper 2 verschweißt, insbesondere mittels Widerstandsschweißen. Durch das Widerstandsschweißen wird eine Schweißnaht 44 an der Kontaktstelle zwischen der äußeren Umfangsfläche 12 und der Anlegestelle des Vorsprungs 40 gebildet. Um dies auszuführen werden vorzugsweise Elektroden einerseits an der Oberfläche 40a des Vorsprungs angelegt, andererseits an der Oberfläche 10a auf der Innenseite des Rollenkörpers 2 und ein entsprechender Strom wird genutzt, um die Schweißnaht 44 zu erzeugen.

Da die zweite Hülse 14 an der ersten Hülse 12 anliegt, ist diese ebenfalls in Richtung der Kegelspitze, also mit Bezug auf Figur 2 nach links festgelegt. Eine Abstützung in Richtung der Kegelöffnung, also mit Bezug auf Figur 2 nach rechts, kann über einen Ring, oder einen Deckel erreicht werden, wie dies mit Bezug auf die Figuren 6 bis 9 näher erläutert werden wird. Gleichzeitig ist verhindert, dass ein Durchbruch durch den Rollenkörper 2 vorgesehen ist, sodass der Rollenkörper 2 den Innenraum 30 dicht umschließt und Öl oder Fett, welches sich im Innenraum 30 befinden kann, nicht nach außen treten kann bzw. kein Medium in das Rolleninnere eintreten kann.

Mit Bezug auf Figur 3 ist ferner zu erkennen, dass in axialer Richtung, das heißt in seitlicher Richtung des Vorsprungs 40, dieser im Wesentlichen vollständig an der Innenumfangsfläche der Ausnehmung 42 anliegt. Dies ist nicht zwingend erforderlich. Um eine Positionierung zu erreichen, reicht es aus, wenn der Vorsprung 40 an der mit Bezug auf Figur 3 rechten Seite der Ausnehmung 42 anliegt, also die Hülse 12 in Richtung der Kegelspitze 16 festlegt. Durch das Anliegen an der gesamten Umfangsfläche der Ausnehmung 42 wird allerdings eine bessere Abdichtung erreicht und auch der Innenraum 36 ist nicht unmittelbar von außen zugänglich. Ferner wird auch ein Spiel der Hülse 12 in die weiteren Richtungen verhindert, wodurch sich eine Geräuschentwicklung im Betrieb vermeiden lässt.

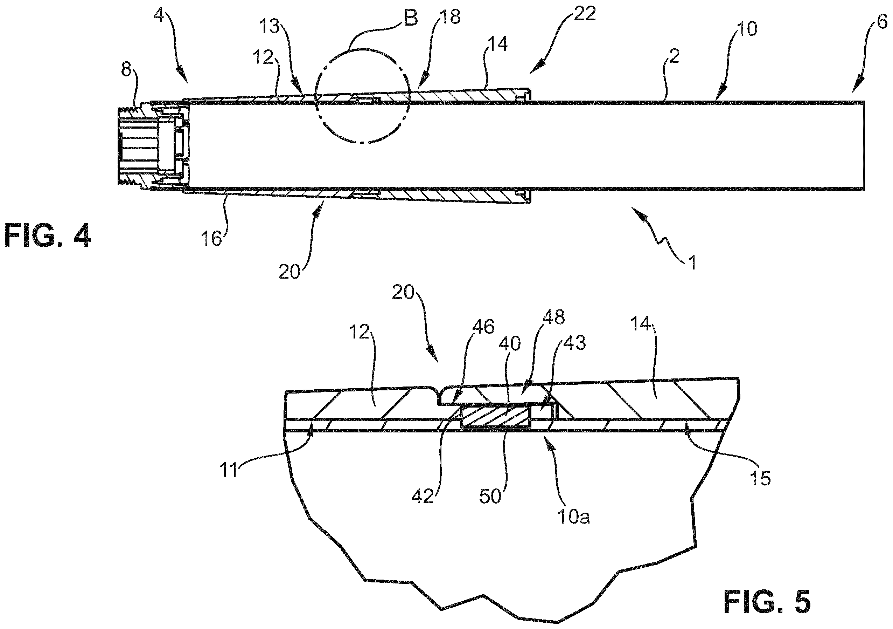

Ein weiteres Ausführungsbeispiel ist in den Figuren 4 und 5 gezeigt, wobei verstanden werden soll, dass auch hieraus einzelne Merkmale abweichend gestaltet sein können oder mit denen des ersten Ausführungsbeispiels der Figuren 2 und 3 kombiniert oder ausgetauscht werden können.

Das Ausführungsbeispiel der Figuren 4 und 5 zeichnet sich einerseits dadurch aus, dass Ausnehmung 42 und Vorsprung 40 in dem Bereich der Kegelöffnung 20 der ersten Hülse 12 angeordnet sind. Die Hülse 12, ist gemäß diesem Ausführungsbeispiel (Figuren 4 und 5) im Wesentlichen aus Vollmaterial ausgebildet und liegt mit ihrer inneren Oberfläche 11 im Wesentlichen flächig an der äußeren Oberfläche 10 des Rollenkörpers 2 an. Die Hülse 12 weist im Bereich der Kegelöffnung 20 eine Abflachung 46 auf, sodass sich ein Abschnitt 48 der zweiten Hülse 14 über die Abflachung 46 erstreckt, sodass die beiden Hülsen 12, 14 aneinander anliegen. Die Hülsen 12, 14 können sowohl in diesem als auch in dem ersten Ausführungsbeispiel aus jeglichem passenden Material gebildet sein, wie etwa Metall oder Kunststoff. Vorzugsweise sind die Hülsen 12, 14 in dem ersten Ausführungsbeispiel aus Metall und in dem zweiten Ausführungsbeispiel aus Kunststoff gebildet.

Gemäß diesem Ausführungsbeispiel ist der Vorsprung 40 in einer Ausnehmung 50 an dem Rollenkörper 2 angeordnet. Die Ausnehmung 50 erstreckt sich teilweise durch das Material des Rollenkörpers 2, aber durchbricht nicht die Innenwand 10a. Die Ausnehmung 50 ist also als Nut mit einem Nutgrund ausgebildet. Die zweite Hülse 14 wird nun mit Bezug auf Figur 4 und 5 von rechts auf dem Rollenkörper 2 angeordnet, sodass der Abschnitt 48 über den Abschnitt 46 gelangt. Der Vorsprung 40 hat dabei eine solche Höhe, dass dieser durch den Abschnitt 48 überdeckt werden kann. Durch die Verbindung der Hülse 14 mit der Hülse 12 ist auch die Hülse 14 axial festgelegt.

Die Umfangsfläche 13 der Hülse 12 ist also im Unterschied zum ersten Ausführungsbeispiel vollständig geschlossen. Im ersten Ausführungsbeispiel (vgl. Fig. 3) durchbricht die Ausnehmung 42 die Umfangsfläche 13 der Hülse 12. In diesem Ausführungsbeispiel hingegen ist die Umfangsfläche 13 vollständig geschlossen sodass die Lauffläche für ein Band keine größeren Unebenheiten oder scharfe Kanten aufweist.

Auch in diesem Ausführungsbeispiel soll verstanden werden, dass der Vorsprung 40 mit dem Rollenkörper 2 zusätzlich verschweißt werden kann. Dies kann wiederum mittels Widerstandsschweißen erfolgen, bevor die Hülse 14 aufgeschoben wird.

Diese Ausführungsform hat den Vorteil, dass von außen, das heißt äußerlich der Hülsen 12, 14 kein Vorsprung oder Ausnehmung 40, 42 sichtbar ist, wie das beim ersten Ausführungsbeispiel der Fall war. Hierdurch hat die Förderrolle 1 insgesamt eine glatte Oberfläche, keinerlei Rattermarkenwirkung auf Fördergüter und eine Belastung eines Förderbands aufgrund von Unebenheiten wird vermieden.

Um hierbei die Montage sicherer zu gestalten kann vorgesehen sein, dass an der Ausnehmung 42 eine Montagesicherung vorgesehen ist. Eine solche Montagesicherung ist vorzugsweise dazu eingerichtet eine fehlerhafte Montage, insbesondere ein Fehlen des Vorsprungs 40 anzuzeigen. Die kann dadurch geschehen, dass ein Verbinden der Hülsen 12 und 14 verhindert ist, oder ein Verbinden zwar möglich ist, aber das Fehlen des Vorsprungs 40 angezeigt wird. Beispielsweise ist an dem Rand der Ausnehmung 42 eine Lasche vorgesehen, die mit dem Vorsprung 40 bei der Montage in die Ausnehmung 42 eingedrückt wird. Fehlt der Vorsprung 40, verhindert die Lasche entweder das Verbinden der Hülsen 12, 14 oder wird umgeklappt und steht so aus der Fügestelle der beiden Hülsen 12, 14 heraus und ist entsprechend sichtbar. So wird eine Qualitätskontrolle vereinfacht.

Die Figuren 6 und 8 illustrieren Förderrollen 1 mit vier Hülsen 12, 14, 62, 64. Das Detail B aus Figur 6 entspricht dem in Figur 5 gezeigten Detail und insofern wird auf das obige verwiesen. Die Hülsen 62, 64 schließen sich direkt an die Hülse 14 an und sind in Richtung der Kegelspitze, also mit Bezug auf Figur 6 nach links, über den Vorsprung 40 abgestützt. In Richtung der Kegelöffnungen 20, 22 sind die Hülsen 12, 14, 62, 64 über die Hülse 64, abgestützt, die gemäß den Figuren 6 und 7 mit dem Ende 66 an einem Deckel 68 abgestützt ist. Der Deckel 68 weist einen sich radial erstreckenden Kragen 70 auf, der sowohl eine radiale als auch axiale Stütze liefert. Der Deckel 68 wird gehalten über ein Anschlussstück 60, welches eine Achsaufnahme 72 hat, die in einem Rollenlager 74 sitzt.

Eine Variante hierzu ist in Figur 8 gezeigt. Das Detail B aus Figur 8 entspricht dem Detail, das in Figur 3 dargestellt ist. Auch in der in Figur 8 dargestellten Ausführungsform sind vier Hülsen 12, 14, 62, 64 vorgesehen, wobei die Abstützung zur Kegelspitze hin über den stoffschlüssig mit dem Rollenkörper 2 verbundenen Vorsprung 40 realisiert ist. Auch hierbei sind die Hülsen 24 und 62 ohne separate Abstützung, sondern werden über die Hülsen 12 und 64 abgestützt.

Figur 9 illustriert ein alternatives Anschlussstück 60. An dem Ende 6 wird in diesem Ausführungsbeispiel (Figur 9) als Abstützung nicht ein Deckel des Anschlussstücks 68 genutzt, sondern eine separate Scheibe 76. Die Scheibe 76 ist auf dem Rollenkörper 2 oder einem Abschnitt des Anschlussstücks 68 radial innerlich aufgepresst und stützt radial äußerlich die Hülse 64 ab. In dem in den Figuren 8 und 9 gezeigten Ausführungsbeispiel ist zudem die Neigung der Hülsen 12, 14, 62, 64 etwas höher und beträgt in etwa 2,2°. Diese Art der Abstützung kann bedarfsweise in den Ausführungen gemäß den Figuren 6 und 8 als Variante zu dem in Figur 7 dargestellten Abschlussstück 60 eingesetzt werden.

## Patentansprüche

1. Förderrolle (1) für Förderanlagen zum Fördern von Behältern, Paletten und dergleichen, mit
einem zylindrischen Rollenkörper (2) mit einer Rotationsachse (Z), der zur rotierbaren Montage in einem Rahmen oder dergleichen vorgesehen ist,
wobei auf dem Rollenkörper (2) eine oder mehrere im Wesentlichen kegelstumpfförmige Hülsen (12) angeordnet sind, und
einer Positioniereinrichtung mittels der die Hülse (12) wenigstens entlang der Rotationsachse (Z) und in Richtung ihrer Kegelspitze (16) axial festgelegt ist, wobei die Positioniereinrichtung einen sich an dem Rollenkörper (2) radial nach außen erstreckenden Vorsprung (40) umfasst, der sich in eine in der Hülse (12) ausgebildete Ausnehmung (42) erstreckt,
**dadurch gekennzeichnet, dass** sich der Vorsprung (40) nach außen erstreckt ohne eine fluidgängige Verbindung zwischen einem Innenraum des Rollenkörpers (2) und der Umgebung herzustellen, und dass die Positioniereinrichtung die Hülse (12) formschlüssig festlegt, wobei die Hülse (12) und der Rollenkörper (2) formschlüssig verbunden sind.

2. Förderrolle nach Anspruch 1, wobei sich der Vorsprung (40) ausschließlich nach außen erstreckt, und vorzugsweise massiv ist.

3. Förderrolle nach einem der vorstehenden Ansprüche, wobei eine innere Oberfläche des Rollenkörpers (2) im Bereich des Vorsprungs (40) unversehrt ist.

4. Förderrolle nach einem der vorstehenden Ansprüche, wobei der Vorsprung (40) mittels einer Schweißverbindung (44) mit dem Rollenkörper (2) verbunden ist.

5. Förderrolle nach einem der vorstehenden Ansprüche, wobei der Vorsprung (40) in eine Ausnehmung (50), vorzugsweise eine Nut mit einem Nutgrund, in dem Rollenkörper (2) eingesetzt ist.

6. Förderrolle einem der vorstehenden Ansprüche, wobei Ausnehmung (42) und Vorsprung (40) im verengten Bereich (16) der kegelstumpfförmigen Hülse (12) angeordnet sind.

7. Förderrolle nach einem der vorstehenden Ansprüche, wobei Ausnehmung (42) und Vorsprung (40) im erweiterten Bereich der kegelstumpfförmigen Hülse (12) angeordnet sind.

8. Förderrolle nach Anspruch 7, wobei Ausnehmung (42) und Vorsprung (40) von einer zweiten, kegelstumpfförmigen Hülse (14) radial überdeckt sind, die sich an die erste kegelstumpfförmige Hülse (12) auf dem Rollenkörper (2) anschließt.

9. Förderrolle nach einem der vorstehenden Ansprüche, wobei eine Umfangsfläche (13) der Hülse (12), die als Lauffläche für einen Riemen dient, geschlossen ist.

10. Herstellungsverfahren für eine Förderrolle (1) nach einem der Ansprüche 1 bis 9, mit den Schritten:
- Bereitstellen oder Herstellen eines Rollenkörpers (2);
- Anordnen einer kegelstumpfförmigen Hülse (12) auf dem Rollenkörper (10);
- axiales Festsetzen der Hülse (12), wenigstens entlang der Rotationsachse (Z) und in Richtung ihrer Kegelspitze (16);
und
- Einsetzen eines Vorsprungs (40) in eine Ausnehmung (42) in der Hülse (12), sodass der Vorsprung (40) in Kontakt mit dem Rollenkörper (2) steht.

11. Herstellungsverfahren nach Anspruch 10, wobei das Festsetzen umfasst:
- Widerstandsschweißen des Vorsprungs (40) mit dem Rollenkörper (2).

12. Herstellungsverfahren nach Anspruch 10 oder 11, wobei das Festsetzen umfasst:
- Einsetzen des Vorsprungs (40) in eine Ausnehmung (50) des Rollenkörpers (2).

13. Herstellungsverfahren nach einem der Ansprüche 10 bis 12, umfassend:
- Anordnen einer zweiten kegelstumpfförmigen Hülse (14) auf dem Rollenkörper (2), axial benachbart zu der ersten Hülse (12); und
- Überdecken des Vorsprungs (40) mit der zweiten Hülse (14).

## Claims

1. Conveyor roller (1) for conveyor systems for conveying containers, pallets and the like, having
a cylindrical roller body (2) having a rotation axis (Z), said cylindrical roller body (2) being provided for the rotatable assembly in a frame or the like, wherein one or a plurality of substantially frustoconical sleeves (12) is/are disposed on the roller body (2), and
a positioning installation by means of which the sleeve (12) is axially fixed at least along the rotation axis (Z) and in the direction of the cone tip (16) of said sleeve (12), wherein the positioning installation comprises a protrusion (40) which extends in a radially outward manner on the roller body (2) and which extends into a clearance (42) that is configured in the sleeve (12),
**characterized in that** the protrusion (40) extends outward without establishing a fluidic connection between an interior space of the roller body (2) and the environment, and **in that** the positioning installation fixes the sleeve (12) in a form-fitting manner, wherein the sleeve (12) and the roller body (2) are connected in a form-fitting manner.

2. Conveyor roller according to claim 1, wherein the protrusion (40) extends exclusively outward, and is preferably solid.

3. Conveyor roller according to either of the preceding claims, wherein an internal surface of the roller body (2) in the region of the protrusion (40) is intact.

4. Conveyor roller according to one of the preceding claims, wherein the protrusion (40) is connected to the roller body (2) by means of a welded connection (44).

5. Conveyor roller according to one of the preceding claims, wherein the protrusion (40) is inserted into a clearance (50), preferably a groove having a groove base, in the roller body (2).

6. Conveyor roller according to one of the preceding claims, wherein the clearance (42) and the protrusion (40) are disposed in the constricted region (16) of the frustoconical sleeve (12).

7. Conveyor roller according to one of the preceding claims, wherein the clearance (42) and the protrusion (40) are disposed in the widened region of the frustoconical sleeve (12).

8. Conveyor roller according to claim 7, wherein the clearance (42) and the protrusion (40) are radially covered by a second frustoconical sleeve (14) which adjoins the first frustoconical sleeve (12) on the roller body (2).

9. Conveyor roller according to one of the preceding claims, wherein a circumferential face (13) of the sleeve (12) which serves as a tread face for a belt is closed.

10. Production method for a conveyor roller (1) according to one of claims 1 to 9, comprising the following steps:
- providing or producing a roller body (2);
- disposing a frustoconical sleeve (12) on the roller body (10);
- axially fixing the sleeve (12) at least along the rotation axis (Z) and in the direction of the cone tip (16) of said sleeve (12);
and
- inserting a protrusion (40) into a clearance (42) in the sleeve (12) such that the protrusion (40) is in contact with the roller body (2).

11. Production method according to claim 10, wherein the fixing comprises:
- resistance welding the protrusion (40) to the roller body (2).

12. Production method according to claim 10 or 11, wherein the fixing comprises:
- inserting the protrusion (40) into a clearance (50) of the roller body (2).

13. Production method according to one of claims 10 to 12, comprising:
- disposing a second frustoconical sleeve (14) on the roller body (2) so as to axially neighbour the first sleeve (12); and
- covering the protrusion (40) by way of the second sleeve (14).

## Revendications

1. Rouleau de transport (1) pour des installations de transport pour transporter des récipients, des palettes et similaires, comprenant un corps de rouleau cylindrique (2) avec un axe de rotation (Z), qui est prévu pour être monté rotatif dans un cadre ou similaire,
une ou plusieurs gaines (12) de forme essentiellement tronconique étant disposées sur le corps de rouleau (2), et
un dispositif de positionnement, au moyen duquel la gaine (12) est fixée axialement au moins le long de l'axe de rotation (Z) et dans la direction de sa pointe de cône (16), le dispositif de positionnement comprenant une partie en saillie (40) s'étendant radialement vers l'extérieur au niveau du corps de rouleau (2), laquelle s'étend dans un évidement (42) réalisé dans la gaine (12),
**caractérisé en ce que** la partie en saillie (40) s'étend vers l'extérieur sans établir de liaison fluidique entre un espace intérieur du corps de rouleau (2) et l'environnement, et **en ce que** le dispositif de positionnement fixe la gaine (12) par engagement par correspondance de formes, la gaine (12) et le corps de rouleau (2) étant connectés par engagement par correspondance de formes.

2. Rouleau de transport selon la revendication 1, dans lequel la partie en saillie (40) s'étend exclusivement vers l'extérieur et est de préférence massive.

3. Rouleau de transport selon l'une quelconque des revendications précédentes, dans lequel une surface intérieure du corps de rouleau (2) dans la région de la partie en saillie (40) est intacte.

4. Rouleau de transport selon l'une quelconque des revendications précédentes, dans lequel la partie en saillie (40) est connectée au corps de rouleau (2) au moyen d'une connexion par soudage (44).

5. Rouleau de transport selon l'une quelconque des revendications précédentes, dans lequel la partie en saillie (40) est insérée dans un évidement (50), de préférence dans une rainure avec un fond de rainure, dans le corps de rouleau (2).

6. Rouleau de transport selon l'une quelconque des revendications précédentes, dans lequel l'évidement (42) et la partie en saillie (40) sont disposés dans la région rétrécie (16) de la gaine de forme tronconique (12).

7. Rouleau de transport selon l'une quelconque des revendications précédentes, dans lequel l'évidement (42) et la partie en saillie (40) sont disposés dans la région élargie de la gaine de forme tronconique (12).

8. Rouleau de transport selon la revendication 7, dans lequel l'évidement (42) et la partie en saillie (40) sont recouverts radialement par une deuxième gaine de forme tronconique (14) qui se raccorde à la première gaine de forme tronconique (12) sur le corps de rouleau (2).

9. Rouleau de transport selon l'une quelconque des revendications précédentes, dans lequel une surface périphérique (13) de la gaine (12), qui sert de surface de roulement pour une courroie, est fermée.

10. Procédé de fabrication d'un rouleau de transport (1) selon l'une quelconque des revendications 1 à 9, comprenant les étapes suivantes:
- fourniture ou fabrication d'un corps de rouleau (2);
- agencement d'une gaine de forme tronconique (12) sur le corps de rouleau (10);
- fixation axiale de la gaine (12), au moins le long de l'axe de rotation (Z) et dans la direction de sa pointe de cône (16); et
- insertion d'une partie en saillie (40) dans un évidement (42) dans la gaine (12) de telle sorte que la partie en saillie (40) soit en contact avec le corps de rouleau (2).

11. Procédé de fabrication selon la revendication 10, dans lequel la fixation comprend:
- le soudage par résistance de la partie en saillie (40) avec le corps de rouleau (2).

12. Procédé de fabrication selon la revendication 10 ou la revendication 11, dans lequel la fixation comprend:
- l'insertion de la partie en saillie (40) dans un évidement (50) du corps de rouleau (2).

13. Procédé de fabrication selon l'une quelconque des revendications 10 à 12, comprenant:
- l'agencement d'une deuxième gaine de forme tronconique (14) sur le corps de rouleau (2), en position axialement adjacente à la première gaine (12); et
- le recouvrement de la partie en saillie (40) avec la deuxième gaine (14).
